# FASCICULE DE BREVET EUROPEEN

(11) **EP 3 509 904 B1**
(45) Date de publication et mention de la délivrance du brevet: **31.03.2021**
(21) Numéro de dépôt: 17758866.2
(22) Date de dépôt: 30.08.2017
(51) Int. Cl.: B60R 21/18, B60R 22/02, B60N 2/28

(54) **SIÈGE AUTO POUR ENFANT À MOYENS DE DÉCONNEXION SÉCURISÉE D'UNE LIAISON ENTRE DEUX FOURREAUX**
AUTOKINDERSITZ MIT MITTELN ZUR SICHEREN TRENNUNG EINER VERBINDUNG ZWISCHEN ZWEI GEHÄUSEN
CHILD CAR SEAT WITH MEANS FOR SAFE DISCONNECTION OF A CONNECTION BETWEEN TWO CASINGS

(30) Priorité: 06.09.2016 FR 1658271
(43) Date de publication de la demande: 17.07.2019
(73) Titulaire: Dorel France, 49309 Cholet Cedex (FR)
(72) Inventeur: BONDU, Gilles, 49100 Angers (FR); GAGNADE, Philippe, 49300 Cholet (FR)
(74) Mandataire: Vidon Brevets & Stratégie
(86) Numéro de dépôt international: PCT/EP2017/071735
(87) Numéro de publication internationale: WO 2018/046363

(56) Documents cités:
- WO-A1-2014/064262
- FR-A1- 2 969 055
- US-A1- 2011 193 396

## Description

Le domaine de l'invention est celui des sièges auto pour enfant, et en particulier des sièges auto munis d'un harnais présentant deux bretelles aptes à maintenir un enfant installé dans le siège, en s'étendant à partir des épaules de celui-ci. Notamment, l'invention s'applique à de tels sièges portant, sur chacune des bretelles, un fourreau prévu pour améliorer le confort et la sécurité de l'enfant en cas de choc, et portant des éléments gonflables, dont le gonflage se déclenche en cas de choc supérieur à un seuil prédéterminé.

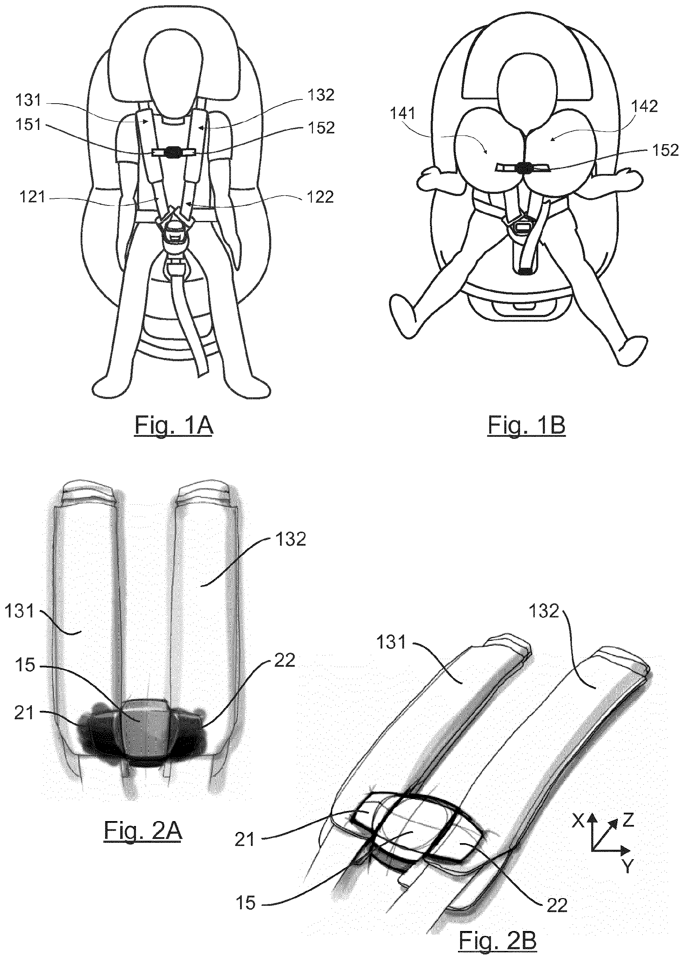

Le Déposant a déjà décrit un tel siège auto, dans le document de brevet FR2969055. Selon cette approche, et comme illustré sur les figures 1A et 1B, les deux éléments gonflables sont solidarisés l'un à l'autre, par les éléments de connecteurs complémentaires 151 et 152. Ceci permet que, en cas de situation nécessitant le gonflage des éléments gonflables, ceux-ci restent solidarisés l'un à l'autre, comme illustré sur la figure 1B. Ainsi l'enfant est efficacement protégé, sans que le déplacement de sa tête vers l'avant n'écarte les éléments gonflables l'un de l'autre.

Le Déposant a développé une solution simple, sûre et efficace pour la solidarisation de ces deux liens.

Ainsi, selon l'invention, une désolidarisation « automatique » de ceux-ci est prévue, s'ils sont approchés et mis en contact avec la tête ou le cou de l'enfant, notamment en cas de choc et/ou de décélération entrainant un déplacement de la tête important de l'enfant vers l'avant alors que le gonflage des éléments gonflables n'est pas effectué, par exemple si cette décélération est inférieure à un seuil prédéterminé requis pour le déclenchement de gonflage. De cette façon, le connecteur de fourreaux se désolidarise en temps utile pour maintenir le bien-être de l'enfant. La sécurité de l'enfant reste bien sûr assuré par le harnais.

L'invention concerne donc un siège auto pour enfant, comprenant un harnais présentant deux bretelles portant chacune un fourreau dans lequel est logé un élément gonflable en cas de choc, lesdits fourreaux étant solidarisables à l'aide d'un connecteur de fourreaux, comprenant deux éléments de connexion complémentaires.

Selon l'invention, lesdits éléments de connexion sont aptes à se désolidariser lorsqu'ils sont déplacés vers la tête d'un enfant installé dans ledit siège et/ou entrent en contact avec la tête et/ou le cou dudit enfant.

Ainsi, ce contact assure la déconnexion immédiate du connecteur.

Selon un mode de réalisation particulier, lesdits éléments de connexion sont désolidarisées par un déplacement de l'un par rapport à l'autre selon une direction sensiblement parallèle à l'axe de déplacement desdits fourreaux.

Selon un mode de réalisation particulier, au moins un desdits éléments de connexion comprend un prolongement présentant une surface de déconnexion configurée pour coopérer avec le corps dudit enfant et assurant la déconnexion desdits éléments lorsque ladite surface de déconnexion entre en contact avec le corps dudit enfant.

Notamment, ladite surface de déconnexion peut être conçue de façon à coopérer avec le menton et/ou le cou dudit enfant.

Par ailleurs, ledit prolongement peut être réalisé dans un matériau déformable, et être par exemple au moins en partie en caoutchouc.

Lesdits éléments de connexion peuvent être adaptées pour se désolidariser avec une force inférieure ou égale à 15 N (appliquée sensiblement dans la direction et le sens de déconnexion).

Selon un mode de réalisation particulier, lesdits éléments de connexion comprennent des moyens magnétiques complémentaires et/ou des moyens mécaniques complémentaires.

L'invention concerne également un connecteur de fourreaux tel que décrit ci-dessus, en tant que tel.

D'autres caractéristiques et avantages de l'invention apparaîtront à la lecture de la description suivante d'un mode de réalisation particulier, donné à titre de simples exemples illustratifs et non limitatifs, et des dessins annexés parmi lesquels :
- les figures 1A et 1B illustrent un exemple de siège auto équipé d'éléments gonflables, auxquels l'invention peut s'appliquer ;
- les figures 2A et 2B sont deux vues agrandies du connecteur de fourreaux selon un mode de réalisation de l'invention ;
- les figures 3A et 3B sont des vues en coupe du connecteur des figures 2A et 2B, respectivement dans la position verrouillée et déverrouillée ;
- les figures 4A et 4B illustrent la position normale du connecteur, lorsqu'un enfant est installé et que le véhicule circule normalement ;
- les figures 5A et 5B illustrent le connecteur lors du début d'une phase de décélération ;
- les figures 6A et 6B illustrent le connecteur lors qu'il arrive en contact avec le menton de l'enfant ;
- les figures 7A et 7B illustrent la désolidarisation du connecteur, dans l'hypothèse où le connecteur vient en contact avec le menton de l'enfant ;
- la figure 8 illustre en variante la situation dans l'hypothèse où le connecteur vient en contact avec le cou de l'enfant.

Comme illustré sur les figures 1A et 1B, déjà commentées en préambule, l'invention peut notamment s'appliquer au cas où le siège auto est équipé d'éléments gonflables 141, 142, logés dans des fourreaux 131, 132 (en anglais « shoulder pads »), qui sont montés coulissant sur les bretelles 121, 122 d'un harnais.

Selon cette approche, il est prévu que les deux éléments gonflables 141, 142 se déploient, en cas de détection d'une situation dangereuse (typiquement la détection d'une décélération supérieure à un seuil prédéterminé). Des moyens de détection pilotent des moyens de déclenchement agissant sur une bombonne de gaz. Ces éléments sont décrits dans le document FR2969055 susmentionné.

Les deux éléments gonflables 141 et 142, et donc les deux fourreaux 131 et 132, sont solidarisés par un connecteur 15, formés de deux éléments de connexion complémentaires 151, 152, qui garantissent que les deux éléments gonflables restent solidaires l'un de l'autre, lorsqu'ils sont gonflés et que la tête de l'enfant vient les heurter (figure 1B), de façon qu'ils ne s'écartent pas l'un de l'autre, et donc que l'enfant soit protégé efficacement.

L'invention concerne plus précisément ce connecteur de fourreaux 15, qui relie les deux fourreaux 131, 132. Lors de l'installation de l'enfant, on place les bretelles 121, 122, on contrôle le cas échéant le bon placement des fourreaux 131 et 132, puis on solidarise le connecteur 15, en reliant les deux éléments 151, 152.

Les figures 2A et 2B illustrent plus précisément un exemple de connecteur, formé d'une première partie 21 solidarisée au fourreau 151, et d'une seconde partie 22 solidarisée au fourreau 152.

Les deux éléments 21 et 22 sont assemblés l'un à l'autre, de façon à assurer une solidarisation efficace. Il peut notamment s'agir d'une connexion du type de celles commercialisées par la Société Fidlock (marque déposée) et notamment décrite dans les documents de brevet US8794682 et US9096148, et plus généralement d'un assemblage garantissant une connexion solide et fiable dans les deux directions X et Y perpendiculaires à la direction Z définie sensiblement par les fourreaux, et qui peut être désolidarisée de façon simple selon la direction Z sensiblement parallèle aux fourreaux. Ainsi, on garantit la sécurité de l'enfant en fonctionnement normal et en cas de déclenchement du gonflage, et on peut désolidariser de façon simple et rapide le connecteur.

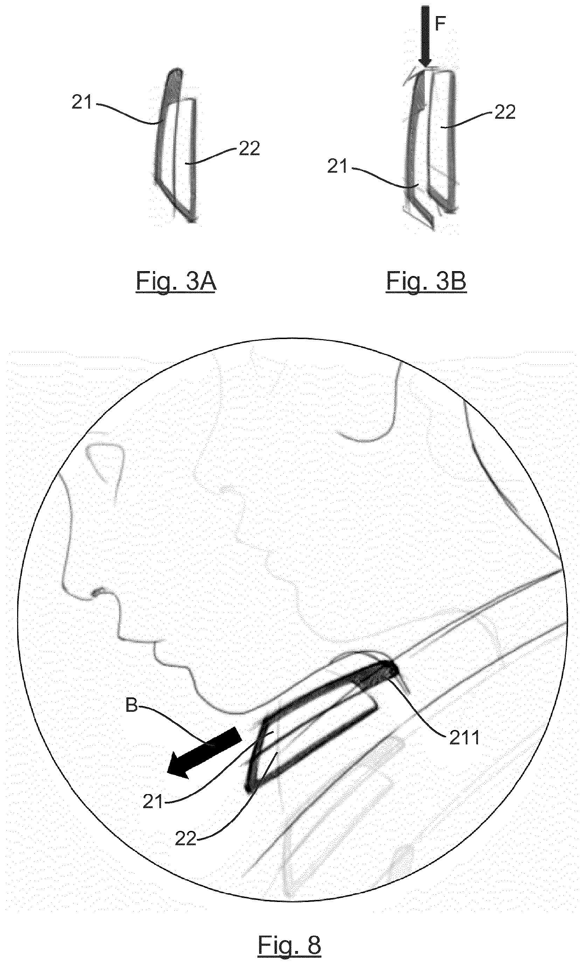

Ce mécanisme est illustré de façon simplifiée par les figures 3A et 3B. Sur la coupe de la figure 3A, les deux éléments 21 et 22 sont assemblés (mécanisme de solidarisation non illustré). En appliquant une force F selon sensiblement la direction Z, l'élément 21 se sépare de l'élément 22.

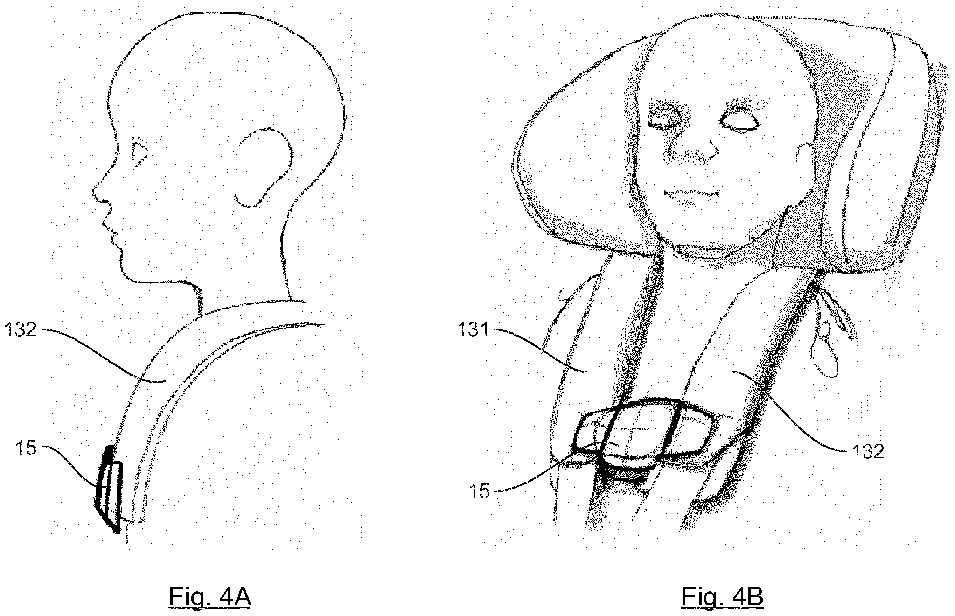

En fonctionnement normal, comme illustré sur les figures 4A et 4B, le connecteur se trouve placé sur le thorax ou le ventre de l'enfant.

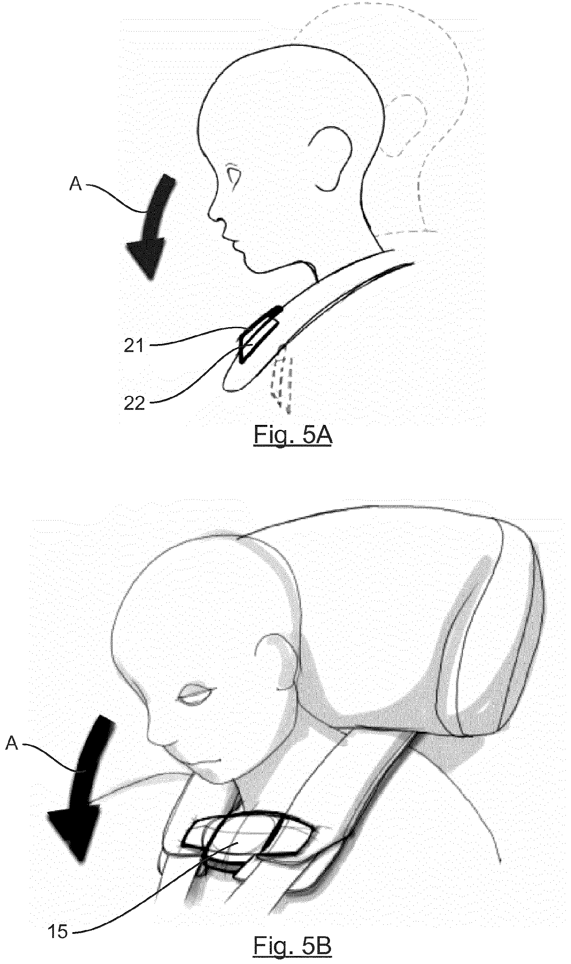

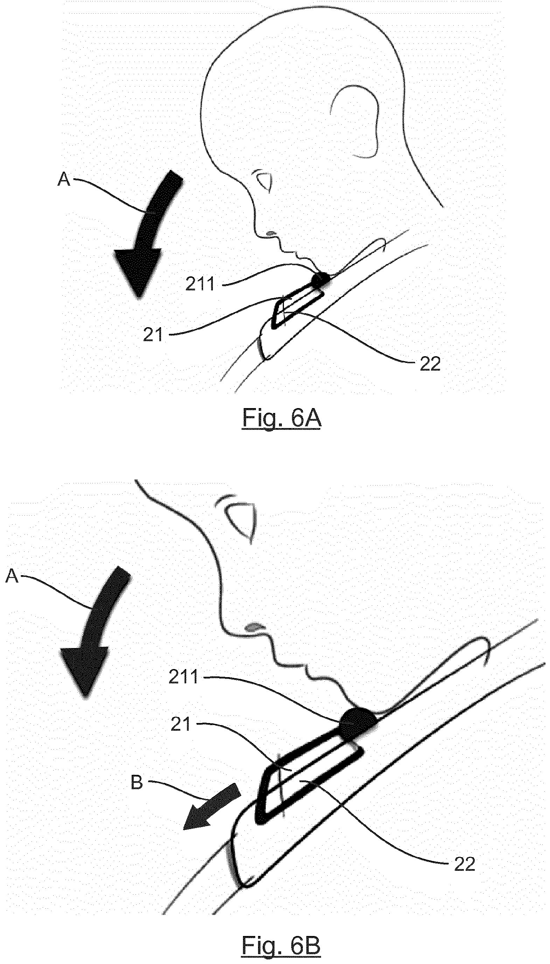

Dans le cas où une décélération relativement importante s'applique au véhicule, et donc à l'enfant, mais que les éléments gonflables ne se déclenchent pas, par exemple parce que le seuil de déclenchement n'est pas atteint, la tête de l'enfant peut se déplacer vers l'avant (flèche A, figures 5A et 5B), et le connecteur 15 peut venir en contact avec le menton (figures 6A et 6B) et/ou le cou (figure 8) de l'enfant notamment.

Pour assurer le bien-être de l'enfant dans cette situation, le connecteur est adapté pour se déverrouiller, comme illustré sur les figures 6A et 6B, dès contact avec le menton de l'enfant.

Pour ceci, la partie 21 du connecteur présente un prolongement de contact 211 qui présente une surface de contact, ou surface de déconnexion, définie pour venir en contact avec le menton (et/ou, selon les modes de réalisation avec une autre partie du corps de l'enfant, et en particulier le cou, comme illustré en alternative sur la figure 6), sous une forme adaptée et avec une matière adaptée pour ne pas blesser l'enfant. Notamment, le prolongement de contact 211 peut être réalisé dans une matière déformable et élastique, par exemple en caoutchouc.

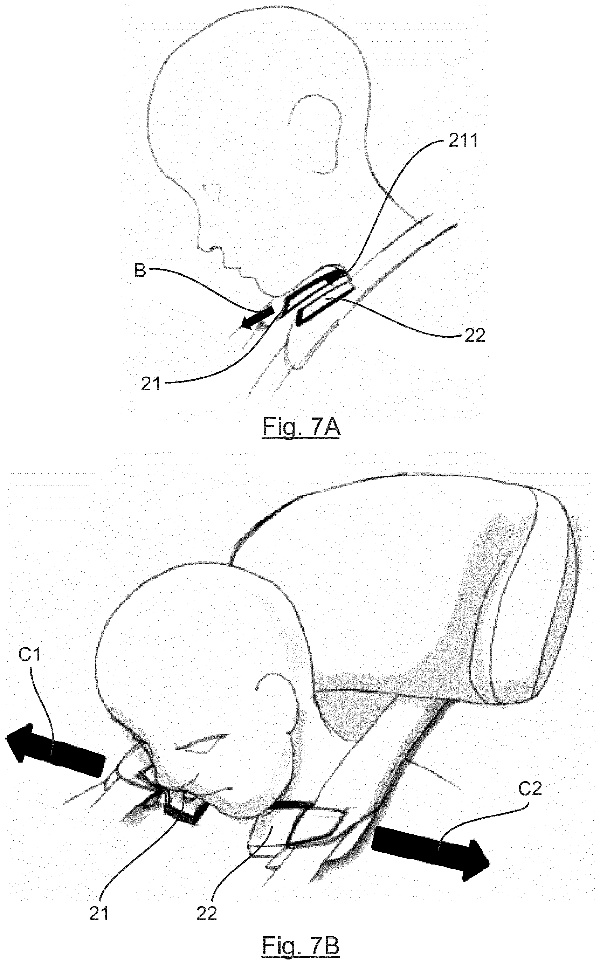

Dès qu'il y a contact entre ce prolongement 221 et le menton de l'enfant, ce prolongement entraine la désolidarisation du connecteur 15. La partie 21 du connecteur est repoussée (flèche B, figures 6 et 7A), selon le principe illustré par les figures 3A et 3B. Les deux parties du connecteur 21 et 22 se séparent alors (flèches C1 et C2, figure 7B).

La force F (figure 3B) nécessaire pour désolidariser les deux éléments dans la direction Z est faible, par exemple inférieure ou égale à 15 N.

Le prolongement de contact 221 s'étend suffisamment au-dessus du reste du connecteur pour que ce contact avec l'enfant assure très rapidement la déconnexion, sans que le connecteur complet, encore connecté, ne nuise à son bien-être.

Chacun des éléments de connexion 21 et 22 peut être relié au fourreau, et à l'élément gonflable porté par ce dernier, par un lien souple (non représenté), par exemple par l'intermédiaire d'une barrette circulant dans une boucle formée à cet effet dans le lien (de façon similaire à la liaison entre le bracelet et le boîtier d'une montre-bracelet).

## Revendications

1. Siège auto pour enfant, comprenant un harnais présentant deux bretelles (121, 122) portant chacune un fourreau (131, 132) dans lequel est logé un élément gonflable (141, 142) en cas de choc, lesdits fourreaux (131, 132) étant solidarisables à l'aide d'un connecteur de fourreaux (15), comprenant deux éléments de connexion (21, 22) complémentaires,
**caractérisé en ce que** lesdits éléments de connexion (21, 22) sont aptes à se désolidariser lorsqu'ils sont déplacés vers la tête d'un enfant installé dans ledit siège et/ou entrent en contact avec la tête et/ou le cou dudit enfant.

2. Siège auto pour enfant selon la revendication 1, **caractérisé en ce que** lesdits éléments de connexion (21, 22) sont désolidarisées par un déplacement de l'un par rapport à l'autre selon une direction sensiblement parallèle à l'axe de déplacement desdits fourreaux (131, 132).

3. Siège auto pour enfant selon l'une quelconque des revendications 1 et 2, **caractérisé en ce qu'**au moins un desdits éléments de connexion (21, 22) comprend un prolongement (211) présentant une surface de déconnexion configurée pour coopérer avec le corps dudit enfant et assurant la déconnexion desdits éléments (21, 22) lorsque ladite surface de déconnexion entre en contact avec le corps dudit enfant.

4. Siège auto pour enfant selon la revendication 3, **caractérisé en ce que** ladite surface de déconnexion est conçue de façon à coopérer avec le menton et/ou le cou dudit enfant.

5. Siège auto pour enfant selon l'une quelconque des revendications 3 et 4, **caractérisé en ce que** ledit prolongement (211) est réalisé dans un matériau déformable.

6. Siège auto pour enfant selon la revendication 5, **caractérisé en ce que** ledit prolongement (211) est au moins en partie en caoutchouc.

7. Siège auto selon l'une quelconque des revendications 1 à 6, **caractérisé en ce que** lesdits éléments de connexion (21, 22) sont désolidarisés avec une force inférieure ou égale à 15 N.

8. Siège auto pour enfant selon l'une quelconque des revendications 1 à 7, **caractérisé en ce que** lesdits éléments de connexion (21, 22) comprennent des moyens magnétiques complémentaires.

9. Siège auto pour enfant selon l'une quelconque des revendications 1 à 8, **caractérisé en ce que** lesdits éléments de connexion (21, 22) comprennent des moyens mécaniques complémentaires.

10. Connecteur de fourreaux (15) pour un siège auto selon l'une quelconque des revendications 1 à 9, comprenant deux éléments de connexion (21, 22) complémentaires,
**caractérisé en ce que** lesdits éléments de connexion (21, 22) sont aptes à se désolidariser lorsqu'ils sont déplacés vers la tête d'un enfant installé dans ledit siège et/ou entrent en contact avec la tête et/ou le cou dudit enfant.

## Patentansprüche

1. Autokindersitz, umfassend einen Gurt, der zwei Schulterriemen (121, 122) aufweist, von denen jeder ein Hülle (131, 132) trägt, in welcher sich ein im Falle eines Aufpralls aufblasbares Element (141, 142) befindet, wobei die Hüllen (131, 132) mit Hilfe eines Hüllenverbinders (15), der zwei zusätzliche Verbindungselemente (21, 22) umfasst, fest verbindbar sind,
**dadurch gekennzeichnet, dass** die Verbindungselemente (21, 22) geeignet sind, sich voneinander zu lösen, wenn sie in Richtung des Kopfes eines in dem Sitz befindlichen Kindes bewegt werden und/oder mit dem Kopf und/oder dem Hals des Kindes in Berührung kommen.

2. Autokindersitz nach Anspruch 1, **dadurch gekennzeichnet, dass** die Verbindungselemente (21, 22) durch eine Bewegung in Bezug zueinander in eine Richtung, die im Wesentlichen parallel zur Bewegungsachse der Hüllen (131, 132) ist, voneinander gelöst werden.

3. Autokindersitz nach einem der Ansprüche 1 und 2, **dadurch gekennzeichnet, dass** mindestens eines der Verbindungselemente (21, 22) eine Verlängerung (211) umfasst, die einen Abkopplungsbereich aufweist, der konfiguriert ist, um mit dem Körper des Kindes zusammenzuwirken, und die Lösung der besagten Elemente (21, 22) sicherstellt, wenn der Abkopplungsbereich den Körper des Kindes berührt.

4. Autokindersitz nach Anspruch 3, **dadurch gekennzeichnet, dass** der Abkopplungsbereich so gestaltet ist, um mit dem Kinn und/oder dem Hals des Kindes zusammenzuwirken.

5. Autokindersitz nach einem der Ansprüche 3 und 4, **dadurch gekennzeichnet, dass** die Verlängerung (211) aus einem verformbaren Material gebildet ist.

6. Autokindersitz nach Anspruch 5, **dadurch gekennzeichnet, dass** die Verlängerung (211) mindestens zum Teil aus Gummi besteht.

7. Autokindersitz nach einem der Ansprüche 1 bis 6, **dadurch gekennzeichnet, dass** die Verbindungselemente (21, 22) mit einer Kraft von nicht mehr als 15 N voneinander gelöst werden.

8. Autokindersitz nach einem der Ansprüche 1 bis 7, **dadurch gekennzeichnet, dass** die Verbindungselemente (21, 22) zusätzliche magnetische Mittel umfassen.

9. Autokindersitz nach einem der Ansprüche 1 bis 8, **dadurch gekennzeichnet, dass** die Verbindungselemente (21, 22) zusätzliche mechanische Mittel umfassen.

10. Hüllenverbinder (15) für einen Autositz nach einem der Ansprüche 1 bis 9, der zwei zusätzliche Verbindungselemente (21, 22) umfasst,
**dadurch gekennzeichnet, dass** die Verbindungselemente (21, 22) geeignet sind, sich voneinander zu lösen, wenn sie in Richtung des Kopfes eines in dem Sitz befindlichen Kindes bewegt werden und/oder mit dem Kopf und/oder dem Hals des Kindes in Berührung kommen.

## Claims

1. Child car seat, comprising a harness having two straps (121, 122) each bearing a shoulder pad (131, 132) in which is housed an inflatable element (141, 142) the event of an impact, with said shoulder pads (131, 132) able to be made integral using a shoulder pad connector (15), comprising two complementary connecting elements (21, 22), **characterised in that** said connecting elements (21, 22) are able to be disengaged when they are moved towards the head of a child installed in said seat and/or come into contact with the head and/or the neck of said child.

2. Child car seat according to claim 1, **characterised in that** said connecting elements (21, 22) are disengaged by a displacement of one in relation to the other according to a direction substantially parallel to the axis of displacement of said shoulder pads (131, 132).

3. Child car seat according to any of claims 1 and 2, **characterised in that** at least one of said connecting elements (21, 22) comprises an extension (211) having a disconnection surface configured to cooperate with the body of said child and which ensures the disconnection of said elements (21, 22) when said disconnection surface comes into contact with the body of said child.

4. Child car seat according to claim 3, **characterised in that** said disconnection surface is designed in such a way as to cooperate with the neck and/or the chin of said child.

5. Child car seat according to any of claims 3 and 4, **characterised in that** said extension (211) is made of a deformable material.

6. Child car seat according to claim 5, **characterised in that** said extension (211) is at least partially made of rubber.

7. Car seat according to any of claims 1 to 6, **characterised in that** said connecting elements (21, 22) are disengaged by a force less than or equal to 15 N.

8. Child car seat according to any of claims 1 to 7, **characterised in that** said connecting elements (21, 22) include complementary magnetic means.

9. Child car seat according to any of claims 1 to 8, **characterised in that** said connecting elements (21, 22) include complementary mechanical means.

10. Shoulder pad connector (15) for a car seat according to any of claims 1 to 9, comprising two complementary connecting elements (21, 22),
**characterised in that** said connecting elements (21, 22) are able to be disengaged when they are moved towards the head of a child installed in said seat and/or come into contact with the head and/or the neck of said child.
